Europäisches Patentamt

European Patent Office

Office européen des brevets

(11) Publication number: **0 256 567**
**A2**

# EUROPEAN PATENT APPLICATION

(21) Application number: 87201172.1

(22) Date of filing: **18.06.87**

(51) Int. Cl.⁴: **A23L 3/38** , A23F 5/32 , A23F 3/26

The title of the invention has been amended (Guidelines for Examination in the EPO, A-III, 7.3).

(30) Priority: **23.06.86 GB 8615304**

(43) Date of publication of application:
**24.02.88 Bulletin 88/08**

(84) Designated Contracting States:
**AT BE CH DE ES FR GB GR IT LI NL SE**

(71) Applicant: **UNILEVER NV**
**Burgemeester s'Jacobplein 1 P.O. Box 760**
**NL-3000 DK Rotterdam(NL)**

(84) **BE CH DE ES FR GR IT LI NL SE AT**

(71) Applicant: **UNILEVER PLC**
**Unilever House Blackfriars P.O. Box 68**
**London EC4P 4BQ(GB)**

(84) **GB**

(72) Inventor: **Hoogstad, Bruin**
**23, Newstead Way**
**Bedford MK41 8RH(GB)**

(74) Representative: **Keppels, Willem Richard**
**Engelbertus Gerardus, Drs. et al**
**Unilever N.V. Patent Division P.O.Box 137**
**NL-3130 AC Vlaardingen(NL)**

(54) Method of preparing a freeze-dried food product.

(57) Method of preparing a food product by freezing a solids-containing food liquid in a continuous layer having a thickness of 0.2 to 5.0 mm in a time between 3 and 100 seconds. The food liquid is preferably a tea or coffee extract, which is frozen in a thin layer on a rotating drum, disrupted into flakes having a thickness of 0.5-1.5 mm and a length and width of 1-7 mm, and freeze-dried.

Fig.1.

EP 0 256 567 A2

Xerox Copy Centre

# A METHOD OF PREPARING A FOOD PRODUCT

This invention relates to a method of preparing a food product.

It is known that solids-containing food liquids can conveniently be frozen and freeze-dried prior to storage. One embodiment of such a freezing process involves filling a tray with a liquid, placing the tray in a blast-freezer and freezing. This process requires a relatively long freezing time, which is energy-consuming and can lead to the loss of volatile aroma components and sediment formation. Therefore this process seems less attractive.

It was found that a product of high quality can be obtained by quick-freezing a food liquid in a thin layer. This process reduces the loss of volatile aroma components.

Therefore, the present invention relates to a method of preparing a food product in which a solids-containing food liquid is frozen in a continuous layer having a thickness of 0.2 to 5.0 mm in a time between 3 and 100 seconds, and subsequently freeze-dried.

This method can be applied to several solids-containing food liquids such as, for example, fruit juices, vegetable concentrates, egg white, milk etc. This method is particularly useful in processing a concentrated tea or coffee extract.

Concentrated tea or coffee extracts are commonly used as a base for instant tea or coffee. The concentrated extracts can be obtained by several known processes, for instance by ultrafiltering a tea or coffee extract. The presence of several volatile aromas in tea and coffee makes the preservation of these aromas by the quick-freezing process followed by freeze-drying according to the invention especially useful.

Another advantage of the above-mentioned process in relation to the freezing of a concentrated tea extract is the avoidance of cream segregation. Cream is a tar-like residue of tea which segregates usually from the from the tea extract especially at temperatures of 60°C or lower. Cream formation can seriously affect the taste and appearance of the tea extract and leads to the loss of solid material and is therefore not desired. It was found, however, that cream segregation can be avoided substantially by using a quick-freezing process according to the invention.

Preferably, a concentrated extract with a solids content between 20% and 35% by weight is used. The preferred temperature of the extract prior to freezing in layer form lies between 20°C and 80°C. More preferred is a temperature between 40°C and 60°C prior to freezing.

Optimal results were obtained by a method wherein the layer of solids-containing food liquid has a thickness of about 0.5 to 1.5 mm and is frozen in about 7 to 30 seconds.

It was found that a particularly convenient embodiment of the process according to the invention relates to the continuous formation of a layer of the liquid on a cooled moving surface. This can for instance be achieved by rotating a cooled drum partly through a container containing the liquid, thus forming a film of the liquid on the outside of the drum. Suitable temperatures of the surface vary from -5°C to -20°C. The temperature of the frozen layer is preferably more than -10°C to avoid sticking of the layer to the freezing equipment.

After freezing, the layer of material can be removed from the surface by any known relevant technique, for instance by scraping. During removal, the sheet will presumably break up into large flakes which can conveniently be stored or further processed.

Preferably, this further processing involves the freeze-drying of the frozen product. The freeze-drying can be carried out either on the large flakes, or on smaller particles obtained by disrupting the flakes. The best results were obtained by freeze-drying particles with an average thickness of from 0.5 to 1.5 mm and a length and width of 1 to 7 mm. The freeze-dried particles will usually have two flat sides corresponding to the original layer surfaces, the remaining surface of the particles being irregularly shaped due to the process of disruption and/or the presence of pores or bubbles in the freeze-dried product. In the case of concentrated tea or coffee extract, it was found that quick-freezing followed by disrupting and conventional freeze-drying results in a particulate food product which is a perfect base for instant tea or coffee.

When the freeze-drying is carried out on the large flakes, it is preferred to disrupt the flakes after freeze-drying into particles having a length and width of 1 to 7 mm.

Figure 1 shows an apparatus for carrying out a freezing process according to the invention.

Figure 2 shows a second embodiment of an apparatus for carrying out the freezing process according to the invention.

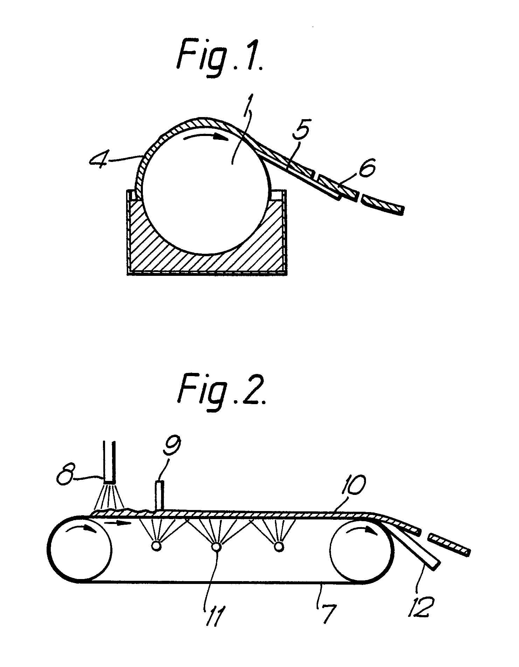

Figure 1 shows a drum 1 which rotates partly through a container 2 containing a solids-containing liquid 3, thus forming a film of liquid 4 on the outside of the drum. The inner surface of the drum is cooled, thus effecting the freezing of the layer of liquid during rotation of the drum. After freezing, the layer is removed from the drum by a scraper 5. The layer breaks up into large flakes 6 which can conveniently be stored or further processed.

Figure 2 shows a moving endless conveyor belt 7 and a spray outlet 8 which is adjusted above the belt and sprays an amount of solids-containing liquid onto the moving surface. A height adjuster 9 flattens the liquid, thus forming a layer 10. The conveyor belt is cooled by applying a refrigerant like a cooled brine solution to the bottom of the belt through inner spray outlets 11, thus effecting the freezing of the layer. The layer is removed from the belt by a scraper 12. The layer breaks up into large flakes 13 which can conveniently be stored or further processed.

The invention will further be illustrated by means of the following examples.

Example 1

Fresh tea leaves are extracted with water for 60 minutes at a temperature of 65°C. The weight ratio of water : tea was 10:1. The resulting tea extract comprises 96% by weight of water and 4% by weight of tea solids. The tea extract is concentrated by reverse osmosis at a temperature of about 60°C and a pressure of about 40 bar. The resulting concentrated tea extract contains 70% by weight of water and 30% by weight of tea solids. The tea concentrate having a temperature of 45°C is frozen in a drum-type freezer in layers with an average thickness of about 1 mm at a temperature of -8°C and at a rate of 3.5 g/sec. The freezing time is approximately 20 seconds. The frozen layer is removed from the drum and disrupted into discrete particles with an average size of about 1 × 3 × 3 mm. The particles freeze-dried at a temperature of 30°C and a pressure of 100 mbar. The end product was a brown granulate which could readily be reconstituted into an infusion with the quality and taste of freshly brewed tea by putting a spoonful (about 0.7 g) of the granulated product in a cup and pouring hot water on to it.

Example 2

Ground roasted coffee beans are extracted with water for 45 minutes at a temperature of 90 to 95°C. The weight ratio of water : coffee was 5:1. The resulting coffee extract comprises 94% by weight of water and 6% by weight of coffee solids. The coffee extract is concentrated by reverse osmosis at a temperature of about 65°C and a pressure of about 40 bar. The resulting concentrated coffee extract contains 65% by weight of water and 35% by weight of coffee solids. The coffee concentrate having a temperature of 55°C is frozen in a drum-type freezer in layers having an average thickness of about 0.8 mm at a temperature of -5°C. The freezing time is approximately 25 seconds. The frozen layer is removed from the drum and disrupted into flakes having an average size of 5 × 10 cm. The flakes are freeze-dried at a temperature of 30°C and a pressure of 100 mbar for 18 hours. The flakes are formed into discrete particles having a size of 0.8 × 2 × 2 mm. The end product was a dark-brown granulate which could readily be reconstituted into an infusion with the quality and taste of freshly brewed coffee by putting a spoonful (about 0.9 g) of the granulated product in a cup and pouring hot water on to it.

Claims

1. A method of preparing a food product, characterized in that a solids-containing food liquid is frozen in a continuous layer having a thickness of 0.2 to 5.0 mm in a time between 3 and 100 seconds, and subsequently freeze-dried.

2. A method according to claim 1, characterized in that the layer has a thickness of 0.5 to 1.5 mm, and is frozen in a time between 7 and 30 seconds.

3. A method according to claims 1-2, characterized in that the layer is continuously formed on a moving surface.

4. A method according to claim 3, characterized in that the layer is formed on a rotating drum.

5. A method according to claims 1-4, characterized in that the food liquid is a concentrated tea extract.

6. A method according to claims 1-4, characterized in that the food liquid is a concentrated coffee extract.

7. A method according to claim 5 or 6, characterized in that the food liquid is a concentrated extract having a solids content between 20 and 35% by weight.

8. A method according to claims 5-7, characterized in that the concentrated extract has a temperature between 20°C and 80°C prior to freezing in layer form.

9. A method according to claim 8, characterized in that the concentrated extract has a temperature between 40°C and 60°C prior to freezing in layer form.

10. A method according to claims 1-9, characterized in that the temperature of the frozen layer is between -10 and 0°C.

11. A method according to claims 1-10, characterized in that the size of the layer material is reduced to form discrete individual particles having a thickness of 0.2 to 5.0 mm, preferably 0.5 to 1.5 mm, and a length and width of 1 to 7 mm.

12. A food product comprising discrete particles of a freeze-dried tea or coffee concentrate obtained by a method substantially as described in one or more of the claims 5-11.

13. A method of preparing a food product substantially as described hereinbefore with reference to the non-comparative examples and the drawings.

14. A food product obtained by a method substantially as described hereinbefore with reference to the non-comparative examples and the drawings.

# Fig.1.

# Fig.2.